Europäisches Patentamt

European Patent Office

Office européen des brevets

(11) Publication number: **0 369 223**
**A1**

## (12) EUROPEAN PATENT APPLICATION

(21) Application number: **89119914.3**

(22) Date of filing: **26.10.89**

(51) Int. Cl.⁵: **C05F 5/00, C05F 11/00, A01G 1/04**

(30) Priority: **27.10.88 AT 2654/88**

(43) Date of publication of application:
**23.05.90 Bulletin 90/21**

(84) Designated Contracting States:
**AT BE CH DE ES FR GB GR IT LI LU NL SE**

(71) Applicant: **BIOCHEMIE GESELLSCHAFT M.B.H.**

**A-6250 Kundl(AT)**

(72) Inventor: **Naschberger, Stephan**

**A-6311 Oberau 339(AT)**
Inventor: **Pretterebner, Rolf**

**A-6250 Breitenbach 316(AT)**

(74) Representative: **Kleine Deters, Johannes et al**
**Sandoz AG Patentabteilung**
**CH-4002 Basel(CH)**

(54) Bacterial biomass fertilizer.

(57) The invention relates to a fertilizer comprising bacterial biomass, a process for its production and its use as a nutrient supplement in mushroom production.

EP 0 369 223 A1

## Bacterial biomass fertilizer

This invention relates to a bacterial biomass, a process for its production and its use in an organic fertilizer as a nutrient supplement in mushroom production. The fertilizer is especially suitable for improving the composting process and as a direct source of nutrient for fungus mycelium. The bacterial biomass of this invention is derived from the liquid organic waste product that is obtained in an antibiotic fermentation process. The liquid organic waste product, which is hereinafter called the liquid phase, refers to the liquid component of an antibiotic fermentation, from which the antibiotic has been isolated and removed. The bacterial biomass of this invention is produced by subjecting the so-called liquid phase to a further fermentation. Optionally, the liquid organic waste products from different fermentation processes may be combined with the liquid phase, prior to the further fermentation.

The use of waste products from penicillin fermentation to produce various products is described in literature. BE 505 453 describes a process for the production of fertilizers, in which waste products from penicillin fermentation, which have strong fermenting activity on cellulose, are used to produce compost. DD 139 083 describes a process for producing a penicillin-free dry mycelium product, which can serve as a feed additive, fertilizer or source of nitrogen for fermentation processes. In this process, the mycelium is suspended in water, after which the suspension is brought to a pH value of >5 with mineral acid. This aqueous mycelium suspension then undergoes spray-drying at 150-300°C. EP 60 407 describes a process for producing penicillin-free mycelium masses from penicillin production cultures (=wet mycelium), in which the residual penicillin present is removed in such a way that the wet mycelium undergoes anaerobic lactic acid fermentation using penicillin-resistant lacto-bacilli. A further possibility of using waste products from penicillin fermentation is described in GB 649 818. Here, the solid fermentation residues are added to nutrients, in order to produce for example vitamin B12 or riboflavin. The production of feed additives which is derived from penicillin fermentation is known. US 3,928,642 thus describes a method in which mycelium waste products from penicillin production are heated under pressure to 140 to 200°C and subsequently dried, so as to be used as feed additives.

The use of waste waters and slurry of various origins and compositions for the production of fertilizers is practiced world-wide. One problem, however, with the use of waste waters is that harmful materials removed from the waste water generally become concentrated in the so-called slurry. One method for dealing with this problem is disclosed in DE 2617 964, wherein the slurry is mixed with calcined lime, after which this mixture can be used as a complete fertilizer.

The inclusion of bacteria to decompose waste water products is also known. JP KOKAI 61/40 886 describes the production of an organic fertilizer by the fermentation of vegetable waste products, a raw sewage cake and sawdust, with aerobic bacteria.

The use of waste water from the biochemical and petroleum refining industry is described in JP KOKAI 70/14 091. Here, photo-synthetic bacteria for use in fertilizer are cultivated in solutions which contain diverse organic salts, sodium salts of low fatty acids, and waste water from the above-mentioned industries.

Liquid organic waste products such as slurries from communal sewage plants or refuse composts are typically contaminated with heavy metals and other hazardous materials. In contrast, the bacterial biomass of this invention is substantially free from heavy metals and other hazardous materials, since the materials used in the further fermentation are obtained from sterile processes. Only non-hazardous raw materials (e.g. soya meal, various types of sugar, trace elements and vitamins) are used for fermentation of the active materials (e.g., antibiotics, proteases). Consequently, the bacterial biomass produced from the further fermentation also has no undesirable heavy metals or other hazardous materials. A further advantage of the bacterial biomass of this invention is the high content of nutrients. The content of nutrients is many times that of communal slurries and refuse composts.

It has now been found that this bacterial biomass fertilizer is especially suitable for fertilization in mushroom production. The bacterial biomass fertilizer may be added to the compost both in pre-composting and in the direct composting phase. So as to enrich the compost with organic material (e.g. stable manure and straw), various products are used in modern mushroom production, e.g. soya products, mineral sources of nitrogen, poultry manure, cocoa bean products, lime, gypsum etc. The bacterial biomass in combination with various compost improving agents and also without these agents has proved to be especially beneficial for the composting process. The bacterial biomass improves both the quality and the decomposition time of the compost and the quality and quantity of the harvest.

By adding formaldehyde to the said bacterial biomass fertilizer, a further beneficial effect is obtained on the yield. The formaldehyde, when present in an effective amount, serves to delay the release of the nutrients contained in the fertilizer. Depending on the quantity of bacterial biomass employed per m$^2$,

2

various concentrations of formaldehyde will benefit the yield, although the formaldehyde will generally be present from 0.2 to 0.8% by weight of bacterial biomass. With a higher quantity of bacterial biomass, a higher quantity of formaldehyde is required to delay the release of the nutrients.

A suitable method for producing bacterial biomass for use in the fertilizer of this invention is as follows:

A typical antibiotic fermentation broth consists of a solid component which contains, for example, a fungus, and a liquid component which contains the antibiotic. The solid component may be separated from the liquid component by any conventional separation means, such as by centrifuge. The antibiotic is then isolated and removed from the liquid component by methods known in the art, for example, by extraction with an organic solvent such as butyl acetate, to yield the so-called liquid phase. As used throughout this application, the term "liquid phase" refers to the liquid componenet of an antibiotic fermentation broth which has had substantially all its antibiotic removed. The liquid phase is treated with a suitable neutralizing agent such as a calcium hydroxide solution to effect neutralization. Optionally, the liquid phase may be combined with the liquid organic waste products from and/or different fermentation processes. Such additional liquid organic waste products serve as further sources of nutrient and bacteria.

The liquid phase is subsequently subjected to a further fermentation in an appropriate vessel, such as an agitating fermentation vessel. During the fermentation process, the liquid phase is suitably kept at ambient or slightly warmer temperatures, e.g. 25-35 °C. Preferably, the temperature is kept constant at 30 °C. Oxygen is added to the fermentation vessel by conventional means, such as by introducing air. Air may be introduced at a rate depending on the particular composition of the filtrate, but it will typically be in the range of 5 to 10 $m^3$ of air per hour per $m^3$ of fermentation volume, more typically about 7 $m^3$ per hour per $m^3$ of fermentation volume. The air, in addition to being a source of oxygen, is a primary source of bacteria for the fermentation process. The bacteria population present in the fermentation vessel consumes the available nutrients to form the bacterial biomass of this invention.

The population of bacteria to be fermented may vary according to ambient conditions, and is generally a mixed culture. Population often include Pseudomonas sp., Bacillus sp., and/or other commonly occurring aerobic bacteria.

After a retention time of 20 to 24 hours, precipitation of the bacterial biomass is attained by adding a precipitation agent such as FeClSO₄, at a rate of about 5 to 10 l of 41 % solution/$m^3$ of fermentation volume. Separation is effected by any suitable separation technique, e.g., by decanting. The separated moist bacterial biomass typically contains about 85 % residual water, so that further transport to a drier can take place using a thick slurry pump. In a suitable drier, such as a rotadisc drier (contact drier), the water content can be reduced to 3-6 %. The dry product of bacterial biomass is then heated to a temperature of about 130 to 150 °C for a duration of 4 to 8 hours. The bacterial biomass is further processed in a pelletizer into a crushable granulate.

The liquid phase from any conventional antibiotic fermentation process may be used in this invention, although the liquid phase from a penicillin fermentation process is preferred. Suitable sources of liquid organic waste products to be optionally combined with the liquid phase are different antibiotic fermentations, such as cephalosporin and chloramphenicol fermentation, as well as protease and ciclosporin fermentations.

In order to balance out the nutrients, potash magnesium fertilizer is mixed with the bacterial bio-mass. The fertilizer according to the invention then contains about 90 to 96% bacterial biomass and 4 to 10% potash magnesium fertilizer, preferably 94% bacterial biomass and 6% potash magnesium fertilizer. A suitable potash magnesium fertilizer is for example PatentkaliTM. If desired, a granulating agent may also be added, for example about 1% animal fat or stearic acid.

**Composition of the bacterial bio-mass fertilizer:**

The bacterial bio-mass fertilizer has on average the following composition (by weight):

| dry substance | 90-97%, e.g., 95.0% |
|---|---|
| organic substance | at least 55.0% |
| Nitrogen (organically bonded) | 4.9-6.1%, e.g., 5.5% |
| $P_2O_5$ | 3.9-5%, e.g., 4.0% |
| $K_2O$ | 2.9-3.7%, e.g., 3.3% |
| CaO | 7-9%, e.g., 8% |
| MgO | 0.8-1.4%, e.g., 1.1% |
| Copper | 10-13 ppm, e.g., 11 ppm |
| Zinc | 30-40 ppm, e.g., 36 ppm |
| Manganese | 72-80 ppm, e.g., 80 ppm |
| Iron | 58-70 ppm, e.g., 64 ppm |
| Lead | < 6 ppm, e.g., < 4 ppm |
| Cadmium | < 2 ppm, e.g., < 1 ppm |
| Chromium | < 15 ppm, e.g., < 12 ppm |
| Cobalt | < 6 ppm, e.g., < 4 ppm |
| Nickel | < 6 ppm, e.g., < 4 ppm |

This analysis shows that the content of valuable components is adequate. As with most organic fertilizers, considerable variations can be expected of this product, and there is an assumed variation coefficient of 10%.

In the following examples, a few possibilities of application of this bacterial biomass fertilizer are shown:

**Example 1:**

The above-mentioned bacterial biomass fertilizer is employed in mushroom production as a nutrient supplement to the compost and to improve the composting process. During pre-composting, 0.5 - 2.0% by weight of bacterial biomass fertilizer is added to the starting material (horse manure), calculated on the fresh mass of the compost. Also, 0.5 - 2.0% of bacterial biomass fertilizer is added to the direct composting phase. A better quality of compost is obtained, and at the same time the yield is improved by 15 - 20% (20 to 24 kg/m$^2$ for 3 harvests) and the quality is improved by 20 - 30%.

**Example 2:**

During composting and pre-composting of so-called "synthetic" composts consisting of straw substrates (e.g. hay substrates), there is attained through the use of bacterial biomass fertilizer an improved composting process (faster decomposing time), a higher yield (from 15 - 25 %), improved quality of mushrooms and more rapid commencement of harvest. The necessary amount of bacterial biomass to be applied depends on the starting substrate, but is 2 - 5 %, based on the damp compost.

**Example 3:**

A supplement with bacterial biomass during casing or spawning leads to a higher yield. Even when applying small quantities (e.g. 100 - 200 g/m$^2$) of bacterial biomass during mulching, there is faster growth of the mushrooms through the covering soil and thus an earlier harvest and a higher yield of 25 - 30 % (harvest 1 - 4). The quality is also improved.

4

| Yields in kg/m², fresh weight of the mushrooms | | | | | | | | | |
|---|---|---|---|---|---|---|---|---|---|
| quantity applied: 165 g bacterial biomass/m², | | | | | | | | | |
| | Beginning of test | 56 days | 60 days | 68 days | 73 days | 76 days | 81 days | 84 days | total |
| BBM* | 0 | 3.45 | 4.60 | 5.25 | 5.55 | 0.72 | 0 | 3.60 | 23.2 kg/m² |
| control | 0 | 2.35 | 4.65 | 3.10 | 3.90 | 2.60 | 1.44 | 3.27 | 21.3 kg/m² |
| * BBM = bacterial biomass fertilizer | | | | | | | | | |

**Example 4:**

In one experiment, oyster mushrooms (Pleurotus ostreatus) are cultivated on a straw bale in underground cellars. For preparation, the bale weighing about 30 kg is drenched with water in a plastic sack for 48 hours, subsequently dried in the cellar and then injected with mushroom spawn. At the time of injecting, one bale is fertilized with 40 g of bacterial biomass, and a control variant having no additional nutrient is maintained. Initially, watering is effected at weekly intervals with tap water, at a rate of about 2.5 litres/bale. After 4 weeks, the intervals are extended to 2 weeks.

| Mushroom harvest in g fresh weight; | | | | | | |
|---|---|---|---|---|---|---|
| | 16.7.88 | 10.8.88 | 3.9.88 | 21.9.88 | 15.10.88 | total kg/bale |
| control | 0 | 2.080 | 0 | 1.050 | 0 | 3.13 |
| BBM | 905 | 1.480 | 1.385 | 0 | 1.045 | 4.81 |

Apart from the yield which is improved by 53.6%, there is in addition an earlier start (ca. 3 weeks) to the formation of fruit. The number of harvests during the observation period is doubled by the bacterial biomass. It is expected that, similarly to the above mushroom cultivation, the unfertilized control variants would during the course of time partly balance out the missing harvests, but the great advantage of shortened cultivation time is maintained.

**Example 5:**

Bacterial biomass fertilizer is mixed at various concentrations for use as a direct nutrient source during spawning of fungus mycelium in the production of various types of mushrooms (Agaricus). A conventional mushroom compost with negligible nitrogen content and about 68% water content is used as a control. The following increases in yield are shown.

Table 3

| Harvest | Control | BBM | | |
|---|---|---|---|---|
| | | 1.4%* | 2.8%* | 4.2%* |
| 1 | 9.9 | 18.8 | 23.4 | 25.3 |
| 2 | 17.4 | 23.8 | 28.3 | 28.6 |
| 3 | 21.4 | 25.4 | - | 30.9 |
| 4 | - | 26.5 | 33.2 | 32.6 |
| 5 ( = total) | 22.0 | 30.1 | 34.4 | 36.1 |
| in % | 100.0 | 136.7 | 156.1 | 164.0 |
| Yields in kg/m² (fresh weight of the mushrooms) | | | | |

* % in relation to wet compost

## Example 6

Bacterial biomass fertilizer is mixed in a concentration of 1.4% in relation to dry compost for use as a direct nutrient source during spawning of fungus mycelium in the production of various types of mushrooms (Agaricus). In production, 16 arrangements are tested with about 30 tons of compost. An average increase in yield of 2.5 kg mushroom per m² are obtained, as shown in table 4.

Table 4

| Yields in kg/m² (fresh mushroom weight) | | |
|---|---|---|
| Harvest | with 1.4% bacterial biomass* | Control: |
| 1 | 10.65** | 9.03** |
| 2 | 8.00** | 7.51** |
| 3 | 2.67** | 2.28** |
| Total: | 21.32** | 18.82** |
| in % | 113.30 | 100.00 |

* % in relation to dry compost
** Average value from 8 samples

## Example 7

By the addition of 1.4 kg bacterial biomass fertilizer per m² (= 1.4% bacterial biomass in relation to damp compost) containing 0.2%, 0.5% and 0.8 % formaldehyde and by the addition of from 2.8 kg bacterial biomass per m² (= 2.8% Bacterial biomass in relation to damp compost) containing 0.2%, 0.5% and 0.8 % formaldehyde, the following results are obtained.

Table 5

| Yields in kg/m$^2$ weight of fresh mushrooms | | | | |
|---|---|---|---|---|
| | Formaldehyde | | | Control |
| | 0.2% | 0.5% | 0.8% | |
| BBM 1.4% | 33.1 | 31.6 | 28.6 | 30.1 |
| BBM 2.8% | 36.8 | 38.5 | 33.4 | 34.4 |
| Control | - | - | - | 22.0 |

**Example 8:**

To a continuous supply of stable manure of 110 t with ca. 62% water content, is added 40 m$^3$ of water, and 1,200 g of bacterial biomass fertilizer (ca. 1% based on wet compost) is mixed in for pre-composting. This "pre-compost" is mixed twice and corresponded to a quantity of 151 t with a water content of 69%. After these additions for composting, 17 m$^3$ of water is again added, and 1,450 kg of cocoa bean shells and 580 kg of soya meal mixed in. In the first mix, 980 kg of ammonium sulphate is additionally mixed in, and 170 t of compost with a water content of ca. 72% is obtained. In the second mix, 2,950 kg of lime is mixed in to balance the pH, and approximately 160 t of compost with a water content of ca. 73% is obtained. After the third mix, the compost mass is still ca. 160 t with a water content of ca. 72%. The compost mass is reduced by pasteurisation to ca. 140 t with ca. 71% water content. Finally, at the time of spawning, there is a quantity of 120 t of compost with ca. 68% water content. 1% spawn is used for spawning.

In Table 6, further steps can be seen, such as opening up the covering, covering with topsoil in the casing process and subsequent fructification. During harvesting, which consists of 3 crops, the success of the additionally used bacterial biomass fertilizer, compared with the annual production average without the bacterial biomass fertilizer supplement, is clearly visible.

The quality was also improved, the lst class quality increasing from 65% to 85%.

**Example 9:**

In another unit, analogously to example 8, with the same quantities of compost and additives, the bacterial biomass is only added during the third mix, and varies between 0.35%, 0.7% and 1.2% based on damp compost. Here also, there were improvements in quality and quantity. Since no statistical stipulations can be planned, only a comparison with the annual production average is possible.

Table 6

| Production Scheme for Examples 8 and 9 | | | | |
|---|---|---|---|---|
| Day | Activity | Amount (ton) | Water Content (%) | Additives |
| 0-5 | load manure | 110 | 62 | Water, bacterial biomass (1% of the compost amount) |
| 5 | mix | 151 | 69 | |
| 9 | mix | 151 | 69 | |
| 13 | set out | 151 | 69 | Water, cocoabean shells, soyameal |
| 15 | first mix | 170 | 72 | Ammonium sulfate |
| 17 | second mix | 160 | 73 | Limestone |
| 19 | third mix | 160 | 72 | bacterial biomass (0.35/0.7/1.2 % of the compost amount) |
| 20 | pasteurising | 140 | 71 | |
| 25 | spawning | 120 | 68 | spawn |
| 38 | opening up | | | |
| 42 | cover with topsoil | | | |
| 48 | fructification | | | |
| 54 | harvest phase | | | |
| 59 | first flushing | | | |
| 67 | second flushing | | | |
| 75 | third flushing | | | |

**Claims**

1. A method for producing mushrooms characterized in that a fertilizer comprising bacterial biomass is used as a nutrient supplement.

2. The method of claim 1, characterized in that the bacterial biomass is produced by the further fermentation of a liquid phase obtained in an antibiotic fermentation.

3. The method of claims 1-2, characterized in that the fertilizer contains formaldehyde in an amount effect to delay the release of the nutrients.

4. The method of claims 1-3, characterized in that the fertilizer comprises, by weight, 90 to 97 % dry mass, at least 55% organic substance, 4.9 to 6.1 % organically bound nitrogen, 3.9 to 5 % $P_2O_5$, 2.9 to 3.7 % $K_2O$, 7 to 9 % CaO, and 0.8 to 1.4 % MgO.

5. The method of claims 1-4, characterized in that the fertilizer comprises an admixture of about 94 % bacterial biomass and 6 % potassium magnesium fertilizer.

6. The method of claims 1-5, characterized in that the antibiotic is penicillin.

7. The method of claims 1-6, charcterized in that the fertilizer is used in pre-composting, composting, and/or spawning.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 140 254 (VEB CHEMIEANLAGENBAUKOMBINAT LEIPZIG-GRIMMA) * Claims; page 4, line 22 - page 5, line 33 * | 1,7 | C 05 F 5/00 C 05 F 11/00 A 01 G 1/04 |
| Y | | 3 | |
| | --- | | |
| X | US-A-4 333 757 (R.H. KURTZMANN, Jr.) * Column 2, lines 18-30; column 2, lines 57-68; column 3, line 12 - column 5, line 4 * | 1,7 | |
| | --- | | |
| Y | US-A-3 942 969 (A.D. CARROLL, Jr., et al.) * Column 4, line 56 - column 5, line 5; claims 1,5 * | 3 | |
| | --- | | |
| A | GB-A- 854 918 (J. VINTIKA et al.) * Claims * | 2 | |
| | --- | | |
| A | DE-A-3 345 635 (O. VOLZ) * Claims; page 7, example * | 5 | TECHNICAL FIELDS SEARCHED (Int. Cl.5) |
| | ----- | | A 01 G C 05 F |

The present search report has been drawn up for all claims

| Place of search | Date of completion of the search | Examiner |
|---|---|---|
| THE HAGUE | 12-02-1990 | SCHUT,R.J. |

EPO FORM 1503 03.82 (P0401)